(19) **Europäisches Patentamt European Patent Office Office européen des brevets**

(11) **EP 1 400 332 B1**

(12) **FASCICULE DE BREVET EUROPEEN**

(45) Date de publication et mention
de la délivrance du brevet:
**17.11.2010 Bulletin 2010/46**

(51) Int Cl.:
***B29C 45/18*** *(2006.01)* ***B29C 45/76*** *(2006.01)*
***B29C 45/54*** *(2006.01)*

(21) Numéro de dépôt: **02020872.4**

(22) Date de dépôt: **18.09.2002**

(54) **Procédé et dispositif de dosage d'un additif à l'entrée d'une presse à injecter, et presse à injecter équipée d'un dispositif de dosage**

Verfahren und Vorrichtung zum Dosieren eines Additives bei der Zufuhr einer Spritzgiesspresse, sowie Spritzgiesspresse mit einer Dosiervorrichtung

Method and apparatus for dosing an additive in the inlet of an injection moulding press, and injection moulding press fitted with a dosing apparatus

(84) Etats contractants désignés:
**DE ES FR GB IT**

(43) Date de publication de la demande:
**24.03.2004 Bulletin 2004/13**

(73) Titulaire: **Amcor Limited
Hawthorn, VIC 3122 (AU)**

(72) Inventeur: **Laurent Degroote
59190 Caestre (FR)**

(74) Mandataire: **Matkowska, Franck et al
Matkowska & Associés
9 Rue Jacques Prévert
59650 Villeneuve d'Ascq (FR)**

(56) Documents cités:
**WO-A-86/06321 US-A- 4 678 420**

- **PATENT ABSTRACTS OF JAPAN vol. 1998, no. 05, 30 avril 1998 (1998-04-30) & JP 10 006364 A (DENKI KAGAKU KOGYO KK), 13 janvier 1998 (1998-01-13)**
- **PATENT ABSTRACTS OF JAPAN vol. 016, no. 047 (M-1208), 6 février 1992 (1992-02-06) & JP 03 251420 A (MEIKI CO LTD), 8 novembre 1991 (1991-11-08)**
- **PATENT ABSTRACTS OF JAPAN vol. 010, no. 222 (M-504), 2 août 1986 (1986-08-02) & JP 61 058714 A (AIDA ENG LTD), 26 mars 1986 (1986-03-26)**
- **PATENT ABSTRACTS OF JAPAN vol. 013, no. 455 (M-879), 13 octobre 1989 (1989-10-13) & JP 01 176540 A (MEIKI CO LTD), 12 juillet 1989 (1989-07-12)**
- **PATENT ABSTRACTS OF JAPAN vol. 016, no. 446 (M-1311), 17 septembre 1992 (1992-09-17) & JP 04 156312 A (SHISUKO:KK), 28 mai 1992 (1992-05-28)**

**Description**

La présente invention concerne un perfectionnement apporté dans le domaine du dosage automatique d'un additif, tel que par exemple un colorant, à l'entrée d'une presse à injecter qui est alimentée par gravité avec au moins un matériau polymère sous forme de granulés. L'invention trouve avantageusement, mais non exclusivement, son application à la fabrication de préformes plastiques, notamment à base de PET (polyéthylène Téréphtalate) par injection dans un moule d'un mélange polymère/additif.

Procédés et dispositifs du dosage automatique d'un additif à l'entrée d'une presse à injecter sont décrits dans les documents JP-A-10 006 364, JP-A-03 251 420 et JP-A-01 176 540.

ART ANTERIEUR

Pour fabriquer des pièces plastiques par injection d'un polymère ou d'un mélange de polymères dans un moule, on utilise une machine d'injection communément appelée presse à injecter, qui comporte une extrudeuse à vis, et dont la sortie (buse d'injection) est raccordée à l'entrée du moule. L'extrudeuse à vis comporte de manière usuelle au moins une vis sans fin dite vis d'extrusion, montée rotative sur elle-même à l'intérieur d'un fourreau chauffant, et équipée d'une part d'un organe moteur pour son entraînement en rotation sur elle-même, et d'autre part d'un organe de poussée, de type piston, pour son déplacement forcé en translation vers l'avant du fourreau, c'est-à-dire en direction de la sortie du fourreau.

Le fourreau de la vis d'extrusion est alimenté en continu, généralement par gravité, avec au moins un matériau polymère sous forme de granulés. L'introduction par gravité des granulés de polymère est réalisée en partie arrière du fourreau. Généralement, et en particulier pour les polymères tel que le PET qui sont facilement dégradables par hydrolyse en produisant des composés indésirables pour le produit final, tel que par exemple de l'acétaldéhyde (AA) dans le cas du PET, les granulés de polymère sont séchés avant introduction dans le fourreau de l'extrudeuse en étant par exemple chauffés dans une trémie de séchage amont dont la sortie est raccordée à l'entrée d'admission du fourreau de l'extrudeuse.

Il existe principalement deux types de presse à injecter : les presses à injecter avec pot d'injection ; les presses à injection directe, encore appelée machines réciproques.

PRESSES A INJECTER AVEC POT D'INJECTION

Dans une presse à injecter avec pot d'injection, la sortie du fourreau de la vis d'extrusion est raccordée à l'entrée du pot d'injection par un conduit de raccordement équipé d'un organe de type vanne ou équivalent pour la fermeture/ouverture du conduit. Le pot d'injection est équipé d'un piston qui permet d'injecter dans le moule le matériau polymère fondu présent dans le pot d'injection. La presse à injecter fonctionne selon un cycle de fonctionnement répétitif comportant une phase dite de transfert suivie d'une phase dite de plastification :

Phase de transfert :

Pendant cette phase, la vanne ou équivalent entre le fourreau de la vis d'extrusion et le pot d'injection est ouverte, la sortie du fourreau communiquant avec l'entrée du pot d'injection.

Cette phase de transfert se caractérise par un déplacement de la vis d'extrusion en translation vers l'avant et sous pression au moyen de l'organe de poussée de la vis. La matière présente dans le fourreau à l'avant de la tête de vis est ainsi poussée par la vis en direction de la sortie du fourreau et est transférée dans le conduit de raccordement et dans le pot d'injection.

Selon le type de presse à injecter, pendant cette phase de transfert, la vis d'extrusion peut, simultanément à son déplacement forcé en translation par l'organe de poussée, être ou non entraînée en rotation sur elle-même.

Phase de plastification

Pendant cette phase, la vanne ou équivalent entre le fourreau de la vis d'extrusion et le pot d'injection est fermée, la sortie du fourreau étant isolée de l'entrée du pot d'injection.

Cette phase de plastification se caractérise par un entraînement en rotation à vitesse contrôlée de la vis d'extrusion selon son axe longitudinal. Le matériau polymère présent dans le fourreau, sous les effets combinés de la température et du cisaillement mécanique de la matière entre la vis et le fourreau, passe progressivement, au fur et à mesure de son avancement dans le fourreau, de l'état solide (granulés) à l'état fondu en étant malaxé (plastification progressive du matériau polymère). Pendant cette phase de plastification, le matériau polymère qui est acheminé vers l'avant du fourreau repousse en translation vers l'arrière la vis d'extrusion (recul de la vis d'extrusion).

Il convient de noter que le matériau polymère n'est pas plastifié nécessairement uniquement au cours de la phase de plastification, mais que cette plastification peut dans certains cas se poursuivre également lors de la phase précitée de transfert.

L'injection du matériau polymère à l'état fondu présent dans le pot d'injection, au moyen du piston auxiliaire dont est équipé ledit pot, est réalisée en temps masqué pendant la phase de plastification, ce qui permet avantageusement d'obtenir des cycles de fonctionnement de faible durée et par là-même des cadences de production élevées et/ou de concevoir une machine dont la phase de plastification peut être plus longue et moins agressive, et/ou concevoir une machine avec une longueur de vis plus courte pour un débit de plastification identique.

PRESSES A INJECTION DIRECTE (MACHINES RECIPROQUES)

Dans une presse à injection directe, la sortie du fourreau de l'extrudeuse est prévue pour être raccordée directement à l'entrée du moule d'injection.

La presse à injecter fonctionne ainsi selon un cycle de fonctionnement répétitif comportant une phase dite d'injection suivie d'une phase de plastification.

Phase d'iniection

Pendant cette phase, la vis d'extrusion est poussée en translation vers l'avant sous pression au moyen de l'organe de poussée de la vis. La matière présente dans le fourreau à l'avant de la tête de vis est ainsi poussée par la vis en direction de la sortie du fourreau et est injectée directement dans le moule en sortie du fourreau.

Phase de plastification

Cette phase est similaire à la phase de plastification précédemment décrite pour les presses à injecter avec pot d'injection.

De la même manière que pour les presses à injecter avec pot d'injection, le matériau polymère n'est pas plastifié nécessairement uniquement au cours de la phase de plastification, mais cette plastification peut dans certains cas se poursuivre également lors de la phase d'injection.

A la différence des presses à injecter avec pot d'injection, dans les presses à injection directe, l'injection du matériau polymère fondu dans le moule est réalisée directement par la vis d'extrusion, lors de sa translation vers l'avant sous pression par l'organe de poussée, et non pas de manière séparée par un piston auxiliaire.

Dans le cas de presse à injection directe avec vis d'extrusion unique, on comprend que l'injection du polymère fondu dans le moule ne peut pas se faire en temps masqué pendant la phase de plastification. Pour pallier cet inconvénient, il est connu à ce jour d'utiliser des presses à injection directe à double vis d'extrusion. Dans ce cas, au cours d'un cycle de fonctionnement une des deux vis est isolée temporairement du moule et travaille en phase de plastification pendant que l'autre vis est raccordée au moule et travaille en phase d'injection ; au cycle suivant, le rôle des deux vis est inversé.

DEFINITION : « phase de transfert » / « Phase de plastification »

L'invention peut être appliquée à tout type connu de presse à injecter avec vis d'extrusion, et notamment aussi bien aux presses à injecter avec pot et piston auxiliaire d'injection, qu'aux presses à injection directe.

Par soucis de simplification, dans la suite de la présente, les termes « phase de transfert » désigneront indifféremment non seulement la phase de transfert précédemment décrite d'un cycle d'une presse à injecter avec pot d'injection, mais également la phase d'injection d'une presse à injection directe, c'est-à-dire d'une manière plus générale la phase au cours de laquelle la vis d'extrusion est poussée en translation à force vers l'avant.

Les termes « phase de plastification » désigneront d'une manière générale la phase au cours de laquelle la vis d'extrusion est entraînée uniquement en rotation et se déplace en translation vers l'arrière, et couvre ainsi la phase précitée de plastification d'un cycle d'une presse à injecter avec pot d'injection ou d'un cycle d'une presse à injection directe.

DOSAGE ADDITIF

Dans l'industrie de l'injection moulage, et notamment dans le domaine de la fabrication de préformes plastiques, qui sont des produits intermédiaires et sont destinées ultérieurement à être étirées et soufflées dans un moule pour former des bouteilles plastiques (produits finaux), il est courant de fabriquer des pièces plastiques colorées. La coloration des pièces est réalisée en ajoutant un colorant au polymère. Ce colorant peut être de type solide (poudre ou granulés) ou de type liquide.

Plus généralement, dans le but de conférer des propriétés particulières au produit final, il est fréquent d'ajouter au polymère des additifs, selon le cas sous forme liquide ou solide, qui ne sont pas nécessairement des colorants. Par exemple dans le domaine de la fabrication de préformes, il est courant d'ajouter comme additifs : additif réducteur d'acétaldéhyde, agent glissant ( « slip agent »), additif pour le blocage des rayons UV (« UV blocker »), additif permettant d'accélérer le chauffage par infra-rouge, agent gonflant ( « foaming agent »), charges diverses, par exemple pour diminuer le coût matière ( talc, carbonate de calcium, ...), additif permettant de réduire la charge électrostatique du produit final, etc...

Tel que cela est décrit dans la demande de brevet Japonais JP 10 006 364, l'ajout d'additif est réalisé en introduisant l'additif dans le fourreau de la vis d'extrusion, pendant la phase de plastification et pendant la phase de transfert, généralement par la même ouverture d'admission que le polymère.

La quantité d'additif ajoutée par unité de temps (Débit d'additif) est également contrôlée automatiquement au moyen d'un dispositif de dosage. Ce dispositif de dosage comporte par exemple une pompe d'alimentation péristaltique ou équivalent dans le cas d'un additif liquide, ou une vis de dosage ou équivalent dans le cas d'un additif sous forme de granulés ou de produit pulvérulent.

L'organe de dosage ( pompe, vis, ...) du dispositif de dosage est commandé automatiquement par des moyens de commande, en fonction notamment d'une consigne prédéterminée, qui est calculée par l'opérateur de la presse à injecter. Cette consigne dépend de la quantité totale d'additif nécessaire par cycle en fonction de la quantité moyenne de polymère utilisée à chaque cycle pour mouler un ou plusieurs produits et de la concentration d'additif recherchée dans chaque produit final moulé. S'agissant plus particulièrement d'un dispositif de dosage à vis, cette consigne est par exemple la vitesse de rotation de la vis de dosage. Cette consigne et la durée estimée d'un cycle sont entrées dans le dispositif de dosage comme paramètres de fonctionnement des moyens de commande électroniques du dispositif de dosage.

D'une manière générale, pendant chaque cycle de fonctionnement de la presse à injecter (phase de transfert/ phase de plastification), les moyens de commande pilotent automatiquement l'organe de dosage à partir notamment de la consigne précitée, laquelle consigne est identique et constante pour les phases de transfert et de plastification d'un cycle. Eventuellement, dans des solutions plus sophistiquées, les moyens de commande peuvent également être conçus pour tenir compte du fonctionnement réel de la vis d'extrusion, en commandant l'organe de dosage en fonction d'une durée de cycle qui n'est pas une constante prédéterminée, mais qui est une variable calculée à chaque cycle, à partir de la durée réelle mesurée de cycles précédents.

En mettant en oeuvre les solutions précitées de dosage de l'art antérieur, on constate en pratique que la concentration en additif n'est pas constante dans tout le produit final moulé, ce qui est préjudiciable à la qualité du produit. Dans le cas d'un colorant, ce défaut d'uniformité peut se traduire par exemple par des défauts visuels de coloration qui peuvent être perceptibles à l'oeil.

Egalement, on constate à l'usage, en particulier dans le cas d'utilisation d'additifs liquides, que la vis d'extrusion a tendance à patiner en phase de plastification, ce qui se traduit par une augmentation qui peut être préjudiciable pour le polymère de la durée de la phase de plastification, voire dans certain cas par un blocage du fonctionnement de la vis d'extrusion nécessitant d'intervenir sur la presse à injecter. Ce défaut s'explique par le fait que l'additif introduit dans la vis d'extrusion, lorsqu'il est localement en excès par rapport à la quantité de polymère, modifie localement dans la vis et de manière trop importante les propriétés rhéologiques, et notamment la viscosité, du matériau en cours de plastification.

Dans le but de pallier ces problèmes, on a déjà proposé de réaliser un pré-mélange additif/ polymère à l'extérieur du fourreau de la vis d'extrusion, au moyen notamment d'un dispositif mélangeur à pales rotatives monté sur le fourreau de la vis d'extrusion.

Cette solution présente toutefois plusieurs inconvénients majeurs.

Un premier inconvénient est une baisse sensible (en pratique d'une ou plusieurs dizaines de degrés Celsius) de la température du polymère à l'entrée du fourreau de la vis d'extrusion. Cet abaissement de température est d'une manière générale préjudiciable pour le processus de plastification du polymère. Il oblige notamment à augmenter la température de chauffage du fourreau de la vis d'extrusion, ce qui est préjudiciable pour la transformation du polymère. En particulier, dans le cas d'un polymère de type PET, l'augmentation de la température de chauffage de la vis augmente les risques de production de produits secondaires issus de la dégradation du polymère, tel que l'acétaldéhyde. Egalement, l'augmentation de la température de chauffage du fourreau de la vis d'extrusion constitue une perte d'un point de vue énergétique et augmente par là-même les coûts de fabrication.

Un deuxième inconvénient est une génération préjudiciable de poussières, due à l'abrasion des granulés ente eux dans le mélangeur.

Un troisième inconvénient réside dans la contrainte et la difficulté de nettoyage du mélangeur, en particulier lors d'un changement d'additif.

OBJECTIF DE L'INVENTION

L'objectif principal de l'invention est de proposer une nouvelle solution aux problèmes précités de défaut d'homogénéité de la quantité d'additif dans le produit moulé et de patinage de la vis d'extrusion de la presse à injecter, c'est-à-dire une solution qui permet d'obtenir une concentration en additif plus homogène dans tout le produit final et qui diminue les risques de patinage de la vis. Cette solution doit également permettre de s'affranchir des inconvénients précités inhérents à la solution de l'art antérieur avec mélangeur (pré-mélange additif/polymère), et en particulier doit éviter un abaissement préjudiciable de la température du polymère à l'entrée de la vis d'extrusion.

SOLUTION DE L'INVENTION

L'objectif précité est atteint au moyen du nouveau procédé de dosage de la revendication 1.
L'invention a également pour autres objets un dispositif visé à la revendication 9 et permettant un dosage automatique d'au moins un additif à l'entrée d'une presse à injecter, une presse à injecter équipée d'un tel dispositif de dosage, et une machine de production d'articles plastiques, et notamment de préformes plastiques, comportant ladite presse à injecter raccordée à un moule d'injection.
Jusqu'à présent, à la connaissance de la demanderesse, toutes les solutions connues de dosage de l'art antérieure reposent sur l'hypothèse que le débit de polymère introduit par gravité à l'entrée de la vis d'extrusion est sensiblement constant pendant toute la durée des phases de transfert et de plastification d'un cycle.
L'invention est basée et découle du constat nouveau qui a été fait que ce débit d'entrée de polymère n'est pas sensiblement constant au cours d'un cycle, mais varie de manière importante entre la phase de transfert et la phase de plastification. Les procédés et dispositif de dosage précités de l'invention permettent ainsi avantageusement de tenir compte de cette différence de débit d'entrée de polymère entre les phases de transfert et de plastification d'un cycle.
A posteriori, cette différence de débit d'entrée de polymère entre les phases de transfert et de plastification d'un cycle peut s'expliquer par la combinaison des deux facteurs suivants.
Au cours de la phase de plastification, les filets de la vis lorsqu'ils arrivent à l'aplomb de l'ouverture d'admission du polymère sont au moins partiellement remplis de polymère, et la quantité de polymère introduite entre chaque filet permet uniquement de compenser la quantité (faible) de polymère fondu qui quitte le filet en progressant vers l'avant de la vis. Une fois la vis en position arrière (fin de la phase de plastification) les filets de la vis qui sont situés en arrière de l'ouverture d'admission par gravité du polymère sont en revanche vides. Ainsi (premier facteur), lorsque la vis est poussée en avant au cours de la phase de transfert, ces filets vides, lorsqu'ils se trouvent à l'aplomb de l'ouverture d'admission, offrent un volume de remplissage plus important susceptible de recevoir par gravité une quantité donnée de polymère qui est plus importante que celle servant à compenser l'avancement du polymère en phase de plastification.
Egalement (deuxième facteur), les vitesses de translation de la vis d'extrusion sont généralement différentes entre la phase de plastification et la phase de transfert. En phase de plastification, la vitesse de recul de la vis d'extrusion dépend notamment des caractéristiques rhéologiques du polymère utilisé, qui permettent sa plastification, c'est-à-dire son passage de l'état de granulés cristallins solides à l'état de polymère fondu amorphe. En phase de transfert, cette vitesse de translation est déterminée en sorte d'obtenir généralement une durée de la phase de transfert qui soit courte, et de préférence la plus courte possible, sans qu'il y ait une détérioration des propriétés du polymère en phase transfert.
Dans la plupart des cas, la vitesse de translation en phase transfert de la vis d'extrusion est supérieure à la vitesse de translation de la vis en phase de plastification, ce qui correspond à une durée de la phase de transfert qui est inférieure à la durée de la phase de plastification. La combinaison des deux facteurs précités aboutit ainsi en pratique à une augmentation sensible du débit d'entrée polymère en phase de transfert, par rapport au débit d'entrée polymère en phase de plastification. Dans ce cas, le procédé de dosage de l'invention se caractérise plus particulièrement par un débit d'entrée d'additif au cours de la phase de transfert qui est supérieur au débit d'entrée d'additif au cours de la phase de plastification.
Il peut néanmoins arriver dans certains cas que la vitesse de translation en phase transfert de la vis d'extrusion soit inférieure à la vitesse de translation de la vis en phase de plastification, et soit suffisamment faible pour que finalement le débit d'entrée polymère en phase de transfert soit inférieur au débit d'entrée polymère en phase de plastification, et ce malgré le premier facteur précité. Dans ce cas particulier de fonctionnement, le procédé de dosage de l'invention se caractérise plus particulièrement par un débit d'entrée d'additif au cours de la phase de transfert qui est inférieur au débit d'entrée d'additif au cours de la phase de plastification.
Dans une mise en oeuvre simplifiée de l'invention, chaque consigne de débit d'entrée d'additif pour la phase de transfert et chaque consigne de débit d'entrée d'additif pour la phase de plastification pourraient être déterminées par l'utilisateur de la presse à injecter et entrées comme paramètres. Dans une réalisation préférée de l'invention les consignes de débit d'entrée d'additif sont calculées automatiquement à chaque cycle de fonctionnement, en fonction notamment de paramètres réels de structure et fonctionnement de la presse à injecter.

BREVE DESCRIPTION DES FIGURES

D'autres caractéristiques et avantages de l'invention apparaîtront plus clairement ci-après à la lecture de la description suivante d'un exemple préféré de réalisation de l'invention, laquelle description est donnée à titre d'exemple non limitatif et non exhaustif, et en référence aux dessins annexés sur lesquels :

- la figure 1 est une représentation schématique d'une installation de fabrication de préformes comportant une presse à injecter équipée d'un dispositif de dosage d'additif conforme à l'invention, la vis d'extrusion de la presse étant dans sa position de début de phase de transfert (ou de fin de phase de plastification),
- la figure 2 représente la presse à injecter de la figure 1, avec la vis d'extrusion dans sa position de fin de phase de transfert,
- la figure 3 représente une variante de presse à injecter, dont la vis d'extrusion est dans sa position de début de phase de transfert (ou fin de phase de plastification), position de la vis dans laquelle la zone de compression de la vis arrive au droit de l'ouverture d'admission du polymère et de l'additif,
- la figure 4 est un organigramme représentant les principales étapes de fonctionnement des moyens de commande pilotant le dispositif de dosage de l'installation de la figure 1,
- la figure 5 représente des exemples de chronogrammes des principales grandeurs (débit d'entrée polymère / consigne de débit d'entrée additif) et du signal de synchronisation utilisé pour synchroniser les moyens de commande du dispositif de dosage,
- la figure 6 représente des exemples de chronogrammes des principales grandeurs (débit d'entrée polymère / consigne de débit d'entrée additif) dans le cas particulier de la presse à injecter de la figure 3.

DESCRIPTION DETAILLEE D'EXEMPLES PREFERES DE REALISATION

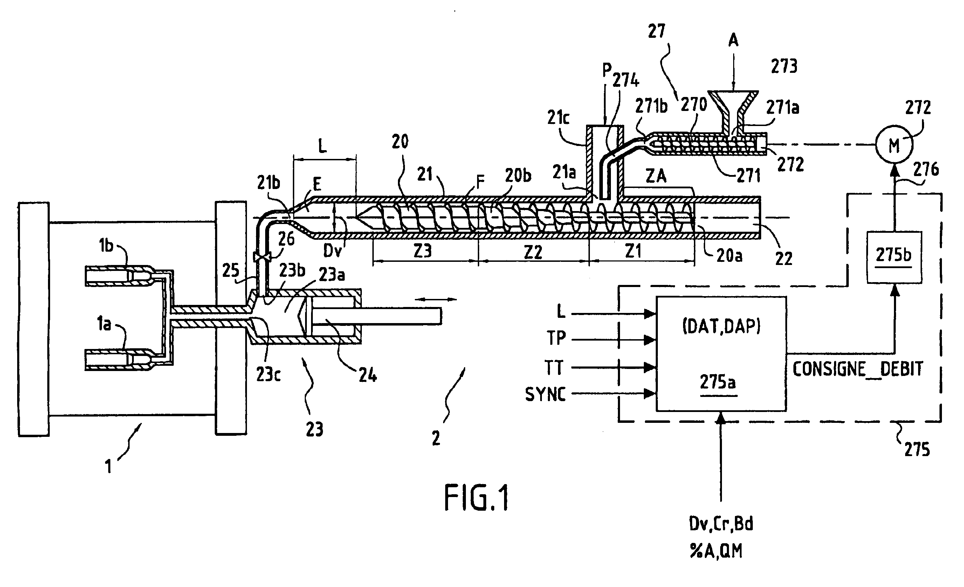

On a représenté sur la figure 1 une installation permettant la fabrication de préformes plastiques, à partir d'un mélange polymère (P)/Additif (A), et comportant un moule 1 multi-cavités, dont l'entrée est raccordée à la sortie d'une presse à injecter 2, décrite en détail ci-après. L'invention n'est bien évidemment pas limitée à la fabrication de préformes plastiques, mais s'étend d'une manière générale à la fabrication de toute pièce en plastique par injection dans un moule d'un mélange polymère(s)/additif(s).

Dans l'exemple illustré le moule 1 comporte deux cavités 1 a, étant précisé qu'en pratique un moule 1 pourrait également comporter une seule cavité 1 a ou de manière plus courante un nombre plus important de cavités 1 a permettant la fabrication, à chaque cycle d'injection, d'une pluralité de préformes simultanément.

Dans l'exemple illustré, la presse à injecter est une presse à pot d'injection, étant précisé que l'homme du métier pourra aisément et immédiatement transposer l'enseignement de la description ci-après à tout autre type connu de presse à injecter, et en particulier à une presse à injection directe dans laquelle la vis d'extrusion fait office de piston pour l'injection de la matière dans le moule 1.

Egalement, dans l'exemple illustré et dans la description ci-après de cet exemple, il est considéré que l'on introduit à l'entrée de la presse à injecter un unique polymère P, étant précisé que dans d'autres réalisations conformes à l'invention, le polymère P pourrait être un mélange de plusieurs polymères, ou que la presse à injecter pourrait comporter plusieurs ouvertures d'admission par gravité de polymères, chaque ouverture étant dédiée à un polymère donné. Les mêmes remarques s'appliquent à l'additif.

Le polymère P est constitué par tout type de polymère thermoplastique connu ou par tout mélange de polymères thermoplastiques connus, qui est apte à être transformé par plastification dans une presse à injecter du type de la figure 1, le polymère le plus couramment utilisé étant le PET. Le polymère ou mélange de polymère P se présente à l'entrée de la presse à injecter sous la forme de granulés ou équivalents, qui ont de préférence été préalablement séchés et qui sont alimentés en continu et par gravité, par exemple en étant issus d'un sécheur (non représenté sur les figures) raccordé à l'entrée de la presse à injecter. A titre d'exemple, s'agissant de granulés de PET, la température du polymère P à l'entrée de la presse à injecter est par exemple de l'ordre de 140°C-150°C.

L'additif A est, dans l'exemple de réalisation illustré, un additif sous forme de granulés solides, étant précisé que d'une manière générale, dans le cadre de l'invention, l'additif pourra se présenter non seulement sous forme granulaire, mais également sous forme pulvérulente, liquide, ou semi liquide (pâte). Cet additif est par exemple, et de manière non exclusive et non limitative de l'invention, un colorant alimentaire.

PRESSE A INJECTER / STRUCTURE

En référence à la figure 1, la presse à injecter 2 comporte de manière connue en soi :

- une vis d'extrusion 20 montée rotative dans un fourreau chauffant 21, et équipée en partie arrière d'un moteur (non visible sur les figures) pour son entraînement en rotation sur elle-même selon son axe central longitudinal 20a ; le fourreau 21 comporte au niveau de sa zone arrière une ouverture 21 a pour l'admission du polymère P et de l'additif A, et à son extrémité avant une ouverture d'évacuation 21 b permettant le transfert du mélange fondu polymère P / additif A ;

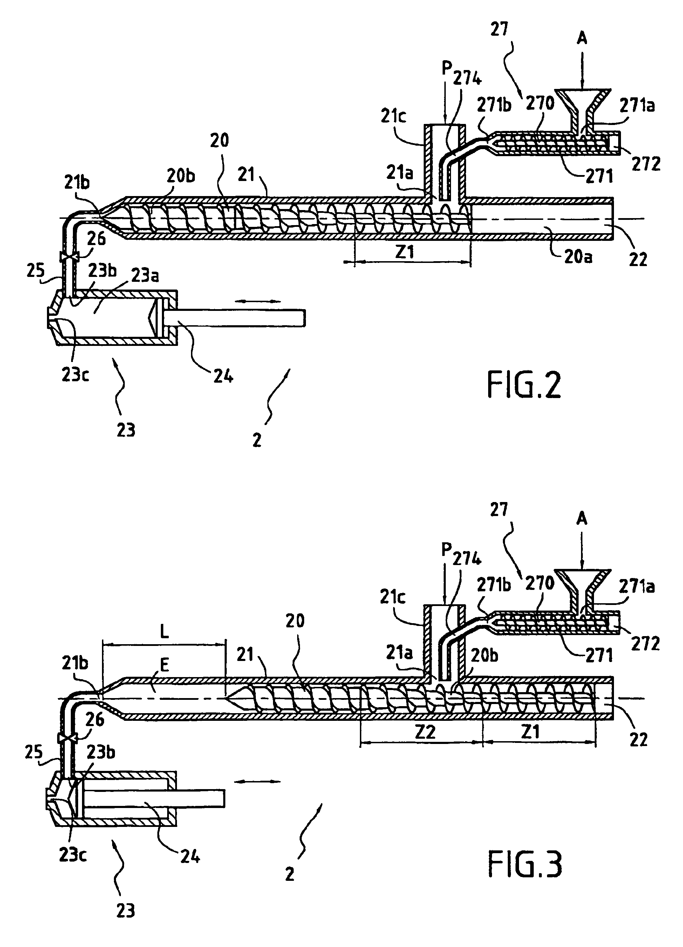

- un organe de poussée 22, type piston hydraulique ou équivalent, qui est prévu pour exercer sur la partie arrière de la vis d'extrusion 20 une force de poussé suffisante pour translater la vis vers l'avant du fourreau 21 (ce qui correspond à la phase de transfert ci-après), de telle sorte que la vis arrive par exemple dans la position de fin de transfert illustrée sur la figure 2;

- un pot d'injection 23 qui délimite une chambre 23a de réception d'une quantité mesurée de mélange fondu polymère P/additif A, et qui est équipé d'un piston d'injection 24 ; ladite chambre 23a comporte en partie supérieure une ouverture d'admission 23b et à l'opposé du piston 24 une ouverture d'évacuation 23c qui est raccordée directement à l'entrée du moule 1 ;

- un conduit court de raccordement 25 reliant la sortie 21 a du fourreau 21 à l'ouverture d'admission 23b de la chambre 23a du pot d'injection 23, lequel conduit 25 est équipé d'une vanne de fermeture 26;

- un dispositif de dosage 27 permettant d'alimenter et de doser l'additif A à l'entrée du fourreau 21.

De manière usuelle également, la vis d'extrusion 20 est une vis sans fin équipée de filets F de diamètre constant et portés par un corps 20b. Ce corps 20b est constitué d'une première portion arrière cylindrique destinée à délimiter, avec la paroi cylindrique du fourreau 21, une zone Z1 dite d'alimentation, une partie tronconique médiane à section croissante destinée à délimiter, avec la paroi cylindrique du fourreau 21, une zone Z2 dite de compression, et une portion cylindrique avant destinée à délimiter, avec la paroi cylindrique du fourreau 21, une zone Z3 dite de transport.

La commande de l'organe de poussée 22 de la vis d'extrusion 20, du moteur permettant l'entraînement en rotation de la vis d'extrusion 20, du piston d'injection 24, et de la vanne 26, est de manière connue en soi assurée de manière automatique par automatisme de commande (automate programmable ou équivalent non représenté) permettant le fonctionnement cyclique de la presse à injecter qui va à présent être décrit en référence aux figures 1 et 2.

PRESSE A INJECTER / FONCTIONNEMENT

On considère qu'au début d'un cycle de fonctionnement, la vis d'extrusion 20 se trouve dans la position axiale de retrait illustrée sur la figure 1 (position retirée vers l'arrière), un espace E de longueur L étant ménagé dans le fourreau 21 entre l'extrémité avant de la vis 20 et l'ouverture d'évacuation 21 b du fourreau 21, du fait du retrait de la vis. Un cycle de fonctionnement de la presse à injecter est constitué des trois phases successives ci-après.

Première phase : phase de transfert

La vanne 26 est en position ouverte. Le piston 24 est en position initiale retirée et délimite avec les parois de la chambre 23a un volume (ou en d'autres termes une quantité) prédéterminée de matière à injecter dans le moule à chaque cycle d'injection. La vis d'extrusion 20 est translatée à force vers l'avant selon son axe longitudinal 20a par l'organe de poussée arrière 22, jusque dans sa position, dite de fin de transfert, illustrée sur la figure 2. La vis a ainsi été déplacée en translation sur une distance correspondant sensiblement à la longueur L. La matière fondue (mélange fondu de polymère et d'additif A) présente dans l'espace E est poussée par la vis d'extrusion 20 agissant comme un piston et est transférée dans le conduit de raccordement 25 et dans la chambre 23a du pot d'injection 23 qui se trouve ainsi remplie avec ledit mélange fondu. Selon le cas, pendant cette phase de transfert, la vis d'extrusion peut simultanément à sa translation forcée, être entraînée en rotation sur elle-même ou être immobile en rotation.

Deuxième phase : phase de plastification

La vanne 26 est amenée en position fermée, et isole le fourreau 21 du pot d'injection 23. La vis d'extrusion 20 est entraînée en rotation sur elle-même selon son axe 20a. La matière (mélange polymère P/additif A) entre la vis 20 et le fourreau 21 est chauffée et malaxée, et progresse au fur et à mesure vers l'avant du fourreau 21 en direction de la sortie 21 b du fourreau 21, tandis qu'à l'inverse la vis d'extrusion 20 recule vers l'arrière en prenant appui sur la matière. Au cours de sa progression vers l'avant dans le fourreau 21, le polymère P et l'additif A fondent sous les effets combinés des forces mécaniques de cisaillement entre le fourreau 21 et la vis 20, et du chauffage par le fourreau chauffant 21, ledit polymère subissant ainsi une plastification et étant mélangé intimement avec l'additif A. Au fur et à mesure de l'avancement de la phase de plastification, l'espace E à l'avant de la vis d'extrusion 20 augmente progressivement en se remplissant de matière fondue (mélange polymère P/additif A).

En parallèle, le moule 1 est fermé, et le piston 24 est poussé en sorte d'injecter dans le moule la quantité de matière fondue (polymère P /additif A) contenue dans la chambre 23a, puis est tiré en arrière en sorte de reprendre sa position initiale, qui détermine le volume (quantité) de matière injectée à chaque cycle.

Troisième phase : phase d'attente

La vis d'extrusion est immobile en translation et en rotation dans sa position de fin de plastification de la figure 1, en attente du signal autorisant le démarrage de la phase de transfert. La durée de cette troisième phase est courte comparativement aux deux premières phases précitées de transfert et de plastification.

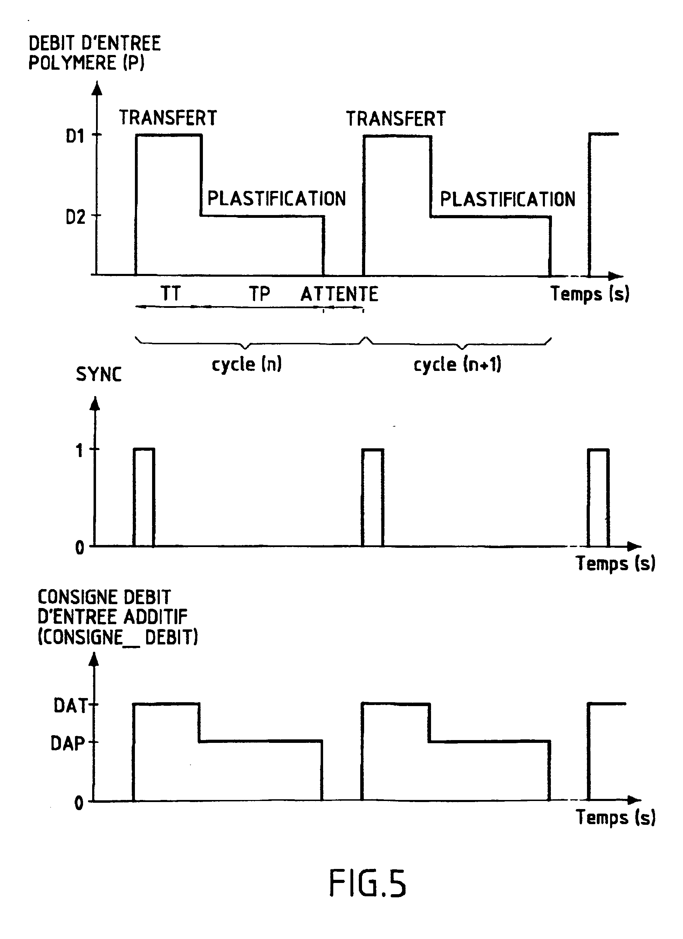

On a représenté, sur le premier chronogramme de la figure 5, un exemple de la variation moyenne du débit d'entrée de polymère P dans le fourreau 21 de la vis d'extrusion 20 au cours de cycles de fonctionnement successifs de la presse à injecter. Le débit d'entrée de polymère n'est pas constant sur tout le cycle, mais varie de manière très sensible entre la phase de transfert et la phase de plastification, le débit D1 d'entrée de polymère P en phase de transfert étant supérieur au débit D2 d'entrée de polymère P en phase de plastification.

Cette différence de débit s'explique de la manière suivante. Lorsque la vis d'extrusion se trouve dans la position illustrée sur la figure 1, les filets F de la vis d'extrusion qui se trouvent dans la zone référencée ZA et située en arrière de l'ouverture d'admission 21 a, sont vides. Lorsque la vis d'extrusion 20 est translatée vers l'avant pendant la phase de transfert, ces filets se remplissent de polymère P alimenté exclusivement par gravité et d'additif A, le débit d'entrée de polymère dans la vis d'extrusion étant de ce fait plus important, étant par ailleurs souligné que dans l'exemple illustré la vitesse de translation vers l'avant de la vis d'extrusion en phase transfert est supérieure à la vitesse de translation vers l'arrière de la vis d'extrusion en phase de plastification (durée de la phase de transfert inférieure à la durée de la phase de plastification). Au contraire, lorsque la vis d'extrusion est en phase de plastification, les filets F de la vis qui sont situés au droit de l'ouverture d'admission 21 a du fourreau 21 sont remplis d'un mélange de polymère et d'additif, seule une faible partie de matière fondue progressant vers l'avant au fur et à mesure du retrait vers l'arrière de la vis d'extrusion 20, et étant remplacée par des granulés de polymère et d'additif. Il en résulte que le débit d'entrée de polymère par gravité en phase de plastification est plus faible.

DISPOSITIF DE DOSAGE

En référence à la figure 1, le dispositif de dosage 27 comporte :

- une vis doseuse 270 montée rotative dans un fourreau 271, et entraînée en rotation par un moteur arrière 272,
- une trémie 273, qui est raccordée à l'ouverture d'admission 271 a du fourreau 271, et qui permet l'alimentation par gravité du fourreau 21 du dispositif de dosage 27 avec l'additif A sous forme granulaire ou équivalent ; le fourreau 271 comporte en outre à son extrémité avant une ouverture 271 b pour l'évacuation de l'additif A, laquelle communique avec une tubulure de sortie 274,
- des moyens électroniques de commande 275 qui, en fonctionnement, pilotent le moteur 272 au moyen d'un signal de commande 276, lesquels moyens de commande 275 sont spécifiques de l'invention et seront détaillés ultérieurement.

Dans l'exemple particulier illustré, la tubulure de sortie 274 précitée d'une part est en partie coaxiale avec un conduit vertical 21 c, qui permet l'introduction par gravité du polymère P à l'entrée du fourreau 21 de la vis d'extrusion 20, et d'autre part permet d'acheminer l'additif A au plus près de l'ouverture d'admission 21 a du fourreau 21.

D'une manière générale, lorsque le dispositif de dosage 27 fonctionne, le moteur 272 entraîne en rotation la vis de dosage 270 avec une vitesse de rotation, qui est réglée automatiquement par les moyens de commande 275 via le signal de commande 276. L'additif A est acheminé par cette vis 270 jusqu'à la sortie 271 b du fourreau 271. En fonctionnement du dispositif de dosage 27, le débit d'additif A en sortie du fourreau 271 correspond au débit d'entrée de l'additif dans le fourreau 21 de la vis d'extrusion 20, et est directement proportionnel à la vitesse de rotation de la vis de dosage 270.

L'invention n'est pas limitée à la mise en oeuvre d'un dispositif de dosage à vis doseuse, mais s'étend à tout dispositif de dosage comportant un organe de dosage équivalent à la vis doseuse, et permettant de régler automatiquement le débit d'alimentation de l'additif A à l'entrée de la presse à injecter. Le dispositif de dosage de la figure 1 est adapté pour doser automatiquement un additif A granulaire ou pulvérulent, mais n'est en revanche pas utilisable pour doser un additif liquide. Ainsi, et de manière non limitative de l'invention, lorsque l'additif est sous forme liquide, le dispositif de dosage 27 de la figure 1 est remplacé par un dispositif de dosage basé sur l'utilisation d'une pompe péristaltique, d'une pompe de dosage à vis spécifique pour liquide ou équivalent.

Moyens de commande (275) du dispositif de dosage

Les moyens de commande 275 comportent essentiellement :

- un module de calcul 275a qui permet de calculer en temps réel une consigne instantanée de débit d'entrée d'additif (figure 1 / signal « CONSIGNE_DEBIT »)
- un variateur de vitesse 275b ou équivalent qui pilote le moteur 272 via le signal de commande précité 276, à partir du signal « CONSIGNE_DEBIT » délivré par le module de calcul 275a.

Le module de calcul 275a est un module programmé, implémenté par exemple, et de manière limitative de l'invention, sous la forme d'un automate programmable industriel, ou encore d'une carte électronique spécifique comportant une unité de traitement programmée à base d'un microprocesseur ou microcontrôleur.

Le fonctionnement de ce module de calcul 275a est avantageusement synchronisé sur le cycle réel de la presse à injecter 2, par un signal de synchronisation (SYNC), issu de l'automatisme de commande de la presse à injecter. Un exemple de chronogramme de ce signal de synchronisation ( SYNC) est donné sur la figure 5.

Le module de calcul 275a fonctionne à partir des paramètres d'entrée ci-après :

TT : Temps de transfert (en secondes) correspondant à la durée d'une phase de transfert.
QM : Quantité (en grammes ) de matière injectée dans le moule 1 à chaque cycle d'injection.
TP : Temps de plastification (en secondes) correspondant à la durée d'une phase de plastification.
L : Course (en mm) de la vis d'extrusion 20 pendant la phase de transfert ; cette longueur est déterminée au cas par cas par l'opérateur en fonction de QM.
% A : Taux d' additif (A) à doser ( % massique )
Dv : Diamètre (en mm) de la vis d'extrusion 20.
Cr : Taux de compression de la vis.
Bd : Densité « en vrac » ( « bulk density ») du polymère P à l'entrée de la vis d'extrusion 20 ( gr/cc)

Les paramètres précitées %A et QM sont des constantes prédéterminées, qui sont propres à la production. Les paramètres Dv et Cr sont des constantes prédéterminées, qui caractérisent la presse à injecter. Le paramètre Bd est une constante spécifique du polymère P à injecter. Par exemple pour le PET, Bd vaut 0,8.

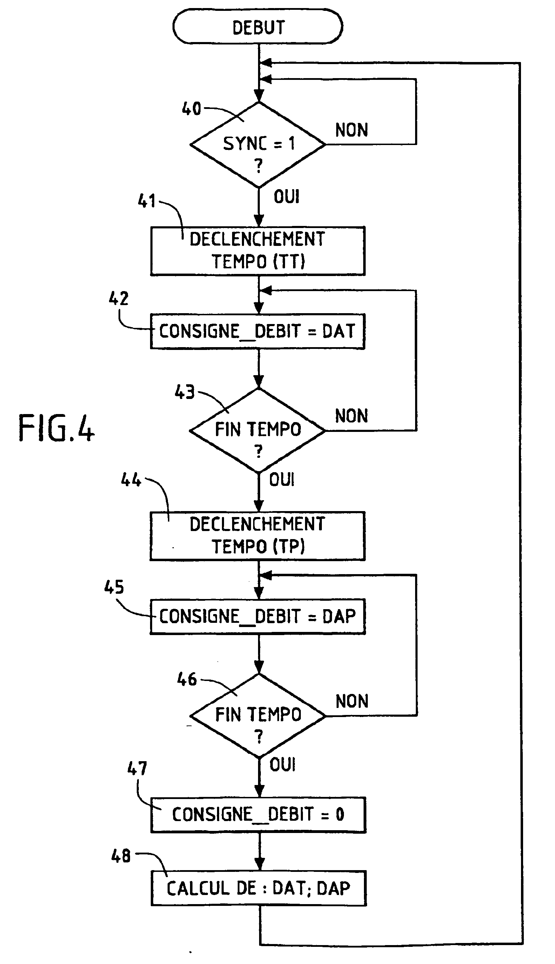

Le fonctionnement des moyens de commande 275 du dispositif de dosage 27 va à présent être expliqué en référence aux figures 4 et 5.

D'une manière générale, les moyens de commande 275 permettent avantageusement de tenir compte de la différence précédemment décrite entre le débit d'entrée de polymère P dans la vis d'extrusion 20 en phase de transfert et le débit d'entrée de polymère P dans la vis d'extrusion 20 en phase de plastification, en calculant automatiquement, pour chaque nouveau cycle, et à partir des paramètres précités, deux consignes de débit d'entrée d'additif DAT et DAP qui sont spécifiques respectivement à la phase de transfert et à la phase de plastification.

Plus particulièrement, en référence à l'organigramme de la figure 4, un exemple de fonctionnement des moyens de commande 275 va à présent être décrit.

Le test initial 40 de l'organigramme de la figure 4 permet de synchroniser le déroulement des étapes suivantes sur un changement d'état du signal de synchronisation (SYNC), caractérisant le début de la phase de transfert d'un cycle (voir également chronogrammes de la figure 5).

Lorsque le signal de synchronisation (SYNC) change d'état, le module de calcul 275 déclenche une temporisation (étape 41) dont la durée est égale au paramètre précité TT ( durée de la phase de transfert) et délivre pour le variateur de vitesse 275b (étape 42) une consigne de débit (CONSIGNE_DEBIT) qui est égale à la variable DAT (consigne de débit d'entrée d'additif en phase transfert) ; la valeur courante de cette variable DAT a été préalablement calculée (lors de la troisième phase d'attente du cycle précédent). Le variateur de vitesse 275b pilote le moteur 272 de la vis de dosage 270 avec une vitesse (V1) permettant d'obtenir un débit réel d'additif A à l'entrée de la vis d'extrusion 20 qui est sensiblement égal à la consigne de débit DAT calculée.

Lorsque la temporisation (durée TT) est écoulée ( figure 4 / test 43), ce qui correspond à la fin de la phase de transfert et au début de la phase de plastification, le module de calcul 275 déclenche une nouvelle temporisation (étape 44) dont la durée est égale au paramètre précité TP (durée de la phase de plastification) et délivre pour le variateur de vitesse 275b (étape 45) une consigne de débit (CONSIGNE_DEBIT) qui est égale à la variable DAP (consigne de débit d'entrée d'additif en phase de plastification) ; la valeur courante de cette variable DAP a été préalablement calculée (lors de la troisième phase d'attente du cycle précédent). Le variateur de vitesse 275b pilote le moteur 272 de la vis de dosage 270 avec une vitesse (V2) (qui est inférieure à la vitesse précitée V1 ) permettant d'obtenir un débit réel d'additif, à l'entrée de la vis d'extrusion 20, qui est sensiblement égal à la consigne DAP calculée.

En référence au troisième chronogramme de la figure 5, la consigne DAT qui est calculée à chaque cycle ( consigne de débit d'entrée d'additif en phase de transfert) est supérieure à la consigne DAP (consigne de débit d'entrée d'additif en phase de plastification), lesdites consignes DAT et DAP étant calculées automatiquement en sorte de tenir compte de la différence de débit d'entrée de polymère entre la phase de transfert( D1 ) et la phase de plastification (D2), et d'obtenir à l'entrée du fourreau 21 de la vis d'extrusion 20 une concentration d'additif dans le mélange polymère/additif qui soit sensiblement constante sur toute la durée du cycle.

Lorsque la temporisation (durée TP) est écoulée ( figure 4 / test 46), ce qui correspond à la fin de la phase de plastification et au début de la phase d'attente, le module de calcul 275 délivre pour le variateur de vitesse 275b (étape 45) une consigne de débit (CONSIGNE_DEBIT) qui est nulle. La vis de dosage 27 est à l'arrêt pendant cette phase d'attente. Pendant la phase d'attente, le module de calcul 275 calcule (figure 4/étape 48) les variables DAT et DAP pour le cycle de fonctionnement suivant.

Dans un exemple préféré de réalisation, le calcul des variables DAT et DAP de l'étape 48 de la figure 4 est effectué par le module 275 à partir des équations ci-après :

$$DAP = \frac{(L.DV^2 \pi.Cr.Bd.\%A)}{400.TP} \qquad (1)$$

$$DAT = \frac{\%A.[QM - (L.DV^2 \pi.Cr.0,25Bd)]}{100.TT} \qquad (2)$$

Dans une variante simplifiée de réalisation, les paramètres d'entrée précités TP et TT, qui sont utilisés par le module de calcul 275a, peuvent être des constantes prédéterminées. Néanmoins, afin de tenir compte du fonctionnement réel de la presse à injecter, et notamment des variations dans le temps, au fur et à mesure des cycles, de la durée des phases de transfert et/ou de la durée des phases de plastification, les variables TP et/ou TT sont de préférence des variables machines, qui sont calculées automatiquement à chaque cycle (de manière connue en soi) et fournies au module calcul 275 par l'automatisme de commande de la presse à injecter 2. Par exemple, ces variables sont mises à jour à chaque nouveau cycle, en fonction de leur valeurs précédentes sur un nombre prédéterminé de cycles précédents, et notamment par calcul de la moyenne de leurs valeurs sur un nombre prédéterminé de cycles précédents.

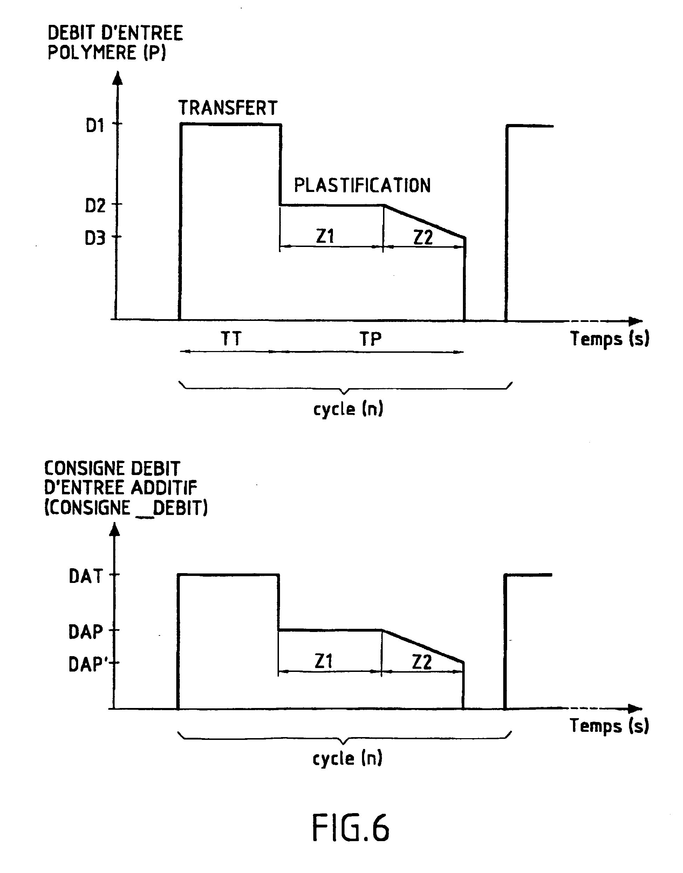

Cas particulier des figures 3 et 6 / gros volume

On a représenté sur la figure 3, la presse à injecter 2 dans le cas particulier de l'injection, à chaque cycle, d'une quantité importante de matière QM, de telle sorte qu'en cours de phase de plastification, la portion médiane tronconique de compression (Z2) de la vis d'extrusion arrive à l'aplomb de l'ouverture d'admission 21 a du fourreau 21. Cette configuration permet d'obtenir, en fin de phase de plastification, une quantité de matière plus importante dans l'espace E à l'avant de la vis d'extrusion 20 ( paramètre longueur L plus important).

En référence aux chronogrammes de la figure 6, on constate qu'en fin de phase de plastification (à partir du moment où l'extrémité arrière de la zone de compression Z2 de la vis 20 arrive à l'aplomb de l'ouverture d'admission 21 a ), le débit d'entrée de polymère n'est plus sensiblement constant et égal à D2, mais décroît sensiblement linéairement jusqu'à atteindre le débit D3 en fin de plastification. Cette chute de débit s'explique par l'augmentation progressive du diamètre du corps 20b de la vis d'extrusion 20 au droit de l'ouverture d'admission 21 a du fourreau 21.

Pour tenir compte de cette chute de débit en fin de phase de plastification, il convient de préférence de programmer les moyens de calcul 275a des moyens commande de telle sorte, qu'à partir du moment où la zone de compression Z2 de la vis 20 se trouve au droit de l'ouverture d'admission 21 a du fourreau 21, lesdits moyens de calcul 275a calculent une consigne (« CONSIGNE_DEBIT ») qui décroît par exemple linéairement dans le temps depuis la valeur courante DAP , selon une pente prédéterminée fonction notamment de la conicité de la zone de compression Z2 de la vis 20.

**Revendications**

1. Procédé de dosage d'au moins un additif (A) à l'entrée d'une presse à injecter (2) comportant une vis d'extrusion (20) qui est alimentée par gravité avec au moins un polymère (P) sous forme de granulés, et qui fonctionne selon un cycle de fonctionnement répétitif comportant une première phase dite de « transfert » au cours de laquelle la vis d'extrusion (20) est déplacée en translation vers l'avant, suivie d'une deuxième phase dite de « plastification » au cours de laquelle la vis d'extrusion (20) est entraînée uniquement en rotation et se déplace en translation vers l'arrière, l'additif (A) à doser étant introduit à l'intérieur du fourreau (21) de la vis d'extrusion (20) de la presse à injecter (2) en même temps que le polymère (P) pendant la phase de transfert et pendant la phase de plastification, **caractérisé en ce que** dans le but de tenir compte de la différence entre le débit réel d'entrée du polymère (P) en phase de transfert et le débit réel d'entrée du polymère (P) en phase de plastification, on Introduit l'additif (A) à l'entrée de la vis d'extrusion avec un débit d'entrée d'additif au cours de la phase de transfert qui est différent du débit d'entrée d'additif au cours de la phase de plastification.

2. Procédé selon la revendication 1 **caractérisé en ce que** le débit d'entrée d'additif au cours de la phase de transfert est supérieur au débit d'entrée d'additif au cours de la phase de plastification.

3. Procédé selon la revendication 1 **caractérisé en ce qu'**on contrôle le débit d'introduction de l'additif à partir d'au moins deux consignes de débit d'entrée d'additif distinctes : au moins une consigne de débit d'entrée d'additif (DAT) calculée spécifiquement pour la phase de transfert, et au moins une consigne de débit d'entrée d'additif (DAP) calculée spécifiquement pour la phase de plastification.

4. Procédé selon les revendications 2 et 3 **caractérisé ce que** chaque consigne de débit d'entrée d'additif (DAT) pour la phase de transfert est supérieure à chaque consigne de débit d'entrée d'additif (DAP) pour la phase de plastification.

5. Procédé selon la revendication 3 ou 4 **caractérisé en ce que** les consignes de débit d'entrée d'additif (DAT, DAP) sont calculées automatiquement à chaque cycle de fonctionnement.

6. Procédé selon l'une des revendications 3 à 5 **caractérisé en ce que** les consignes de débit d'entrée d'additif (DAT, DAP) sont calculées à partir des paramètres ci-après :

   - durée (TT) d'une phase de transfert ;
   - durée (TP) d'une phase de plastification ;
   - Course (L) de la vis d'extrusion pendant la phase de transfert ;
   - Taux (%A) d' additif (A) à doser ;
   - Quantité de matière (QM) injectée à chaque cycle d'injection ;
   - Diamètre (Dv) de la vis d'extrusion ;
   - Taux de compression (Cr) de la vis d'extrusion ;
   - Densité « en vrac » (Bd) du polymère (P) à l'entrée de la vis.

7. Procédé selon la revendication 6 **caractérisé en ce que** les consignes de débit d'entrée d'additif (DAT, DAP) sont calculées au moyen des deux formules suivantes :

$$DAP = \frac{(L.DV^2\,\pi.Cr.Bd.\%A)}{400.TP}$$

$$DAT = \frac{\%A.[QM - (L.DV^2\,\pi.Cr.0,25Bd)]}{100.TT}$$

8. Procédé selon l'une des revendications 3 à 7 **caractérisé en ce que** les consignes de débit d'entrée d'additif (DAT, DAP) sont calculées automatiquement à chaque cycle de fonctionnement, à partir au moins des paramètres ci-après :

   - durée (TT) d'une phase de transfert ;
   - durée (TP) d'une phase de plastification ;

   et **en ce que**, afin de tenir compte du fonctionnement réel de la presse à injecter (2), le paramètre (TP) et/ou le paramètre (TT) sont des variables qui sont calculées automatiquement à chaque cycle.

9. Dispositif de dosage (27) d'au moins un additif (A) à l'entrée d'une presse à injecter (2), lequel dispositif comporte un organe de dosage (270) piloté par des moyens de commande (275) en sorte de régler automatiquement le débit d'introduction de l'additif à partir d'une consigne prédéterminée, dite consigne de débit d'entrée d'additif, **caractérisé en ce que** les moyens de commande (275) pilotent l'organe de dosage (270) selon un cycle de fonctionnement répétitif qui comporte une première phase correspondant à la phase de transfert de la presse à injecter, et une deuxième phase correspondant à la phase de plastification de la presse à injecter, et en fonction d'au moins deux consignes de débit d'entrée d'additif distinctes : au moins une consigne de débit d'entrée d'additif (DAT) spécifique pour la première phase de transfert, et au moins une deuxième consigne de débit d'entrée d'additif (DAP) spécifique pour la deuxième phase.

**10.** Dispositif selon la revendication 9 **caractérisé en ce que** chaque consigne de débit d'entrée d'additif (DAT) pour la phase de transfert est supérieure à chaque consigne de débit d'entrée d'additif (DAP) pour la phase de plastification.

**11.** Dispositif selon la revendication 9 ou 10 **caractérisé en ce que** les moyens de commande (275) du dispositif de dosage comportent des moyens de calcul (275a) conçus pour calculer automatiquement les consignes de débit d'entrée d'additif à chaque cycle de fonctionnement.

**12.** Dispositif selon l'une des revendications 9 à 11 **caractérisé en ce que** les moyens de calcul (275a) sont conçus pour calculer automatiquement les consignes de débit d'entrée d'additif (DAT, DAP) à partir des paramètres ci-après ;

  - durée (TT) d'une phase de transfert ;
  - durée (TP);d'une phase de plastification ;
  - Course (L) de la vis d'extrusion pendant la phase de transfert ;
  - Taux (%A) d' additif (A) à doser;
  - Quantité de matière (QM) injectée à chaque cycle d'injection ;
  - Diamètre (Dv) de la vis d'extrusion ;
  - Taux de compression (Cr) de la vis d'extrusion ;
  - Densité « en vrac » (Bd) du polymère (P) à l'entrée de la vis.

**13.** Dispositif selon la revendication 12 **caractérisé en ce que** les moyens de calcul (275a) sont conçus pour calculer automatiquement les consignes de débit d'entrée d'additif (DAT, DAP) au moyen des deux formules suivantes :

$$DAP = \frac{(L.DV^2\pi.Cr.Bd.\%A)}{400.TP}$$

$$DAT = \frac{\%A.[QM - (L.DV^2\pi.Cr.0,25Bd)]}{100.TT}$$

**14.** Dispositif selon l'une des revendications 9 à 13 **caractérisé en ce que** le fonctionnement des moyens de commande (275) est synchronisé avec le fonctionnement de la presse à injecter (2) par un signal de synchronisation ( SYNC) issu de la presse à injecter.

**15.** Presse à injecter (2) comportant une vis d'extrusion (20) qui est prévue pour être alimentée par gravité avec au moins un polymère (P) sous forme de granulés, et un dispositif de dosage (27) permettant l'introduction dans le fourreau de la vis d'extrusion d'au moins un additif (A) avec un débit contrôlé, la vis d'extrusion (20) de la presse à injecter fonctionnant selon un cycle de fonctionnement répétitif, qui comporte une première phase dite de « transfert » au cours de laquelle la vis d'extrusion (20) est déplacée en translation vers l'avant, suivie d'une deuxième phase dite de « plastification » au cours de laquelle la vis d'extrusion (20) est entraînée uniquement en rotation et se déplace en translation vers l'arrière, **caractérisée en ce que** le dispositif de dosage (27) est conforme au dispositif visé à l'un des revendications 9 à 14.

**16.** Presse à injecter selon la revendication 15 **caractérisée en ce qu'**elle comporte un pot d'injection (23) équipé d'un piston d'injection (24).

**17.** Presse à injecter selon la revendication 15 **caractérisée en ce qu'**elle est du type à injection directe.

**18.** Presse à injecter selon l'une des revendications 15 à 17 dans laquelle les moyens de commande (275) du dispositif de dosage sont synchronisés par un signal de synchronisation (sync) sur le cycle réel de la presse à injecter.

**19.** Machirie de production d'articles plastiques, et notamment de préformes plastiques, **caractérisée en ce qu'**elle comporte une presse à injecter visée à l'une des revendication 15 à 18, et raccordée en sortie à un moule (1).

**Claims**

1. Method for dosing at least one additive (A) at the inlet of an injection moulding machine (2) including an extrusion screw (20), which is supplied by means of gravity with at least one polymer (P) in the form of pellets and which operates according to a repetitive operating cycle including a first so-called "transfer" phase during which the extrusion screw (20) is translationally displaced forwards, followed by a second so-called "plasticising" phase, during which the extrusion screw (20) is made to rotate only and translationally displaces backwards, the dosing additive (A) being introduced inside the barrel (21) of the extrusion screw (20) of the injection moulding machine (2) at the same time as the polymer (P) during the transfer phase and during the plasticising phase, **characterised in that**, with the aim of taking into account the difference between the real input rate of flow of the polymer (P) in the transfer phase and the real input rate of flow of the polymer (P) in the plasticising phase, the additive (A) is introduced at the inlet of the extrusion screw with an additive input rate of flow during the transfer phase, which is different from the additive input rate of flow during the plasticising phase.

2. Method according to claim 1, **characterised in that** the additive input rate of flow during the transfer phase is greater than the additive input rate of flow during the plasticising phase.

3. Method according to claim 1, **characterised in that** the additive introduction rate of flow is controlled by at least two distinct additive input rate of flow set values: at least one additive input rate of flow set value (DAT) calculated specifically for the transfer phase, and at least one additive input rate of flow set value (DAP) calculated specifically for the plasticising phase.

4. Method according to claims 2 and 3, **characterised in that** each additive input rate of flow set value (DAT) for the transfer phase is greater than each additive input rate of flow set value (DAP) for the plasticising phase.

5. Method according to claim 3 or 4, **characterised in that** the additive input rate of flow set values (DAT, DAP) are automatically calculated at each operating cycle.

6. Method according to one of claims 3 to 5, **characterised in that** the additive input rate of flow set values (DAT, DAP) are calculated from the following parameters:

   - duration (TT) of a transfer phase;
   - duration (TP) of a plasticising phase;
   - distance of travel (L) of the extrusion screw during the transfer phase;
   - rate (%A) of dosing additive (A);
   - quantity of material (QM) injected at each injection cycle;
   - diameter (Dv) of the extrusion screw;
   - compression rate (Cr) of the extrusion screw;
   - bulk density (Bd) of the polymer (P) at the inlet of the screw.

7. Method according to claim 6, **characterised in that** the additive input rate of flow set values (DAT, DAP) are calculated by means of the two following formulae:

$$DAP = \frac{\left(L.DV^2 \pi.Cr.Bd.\%A\right)}{400.TP}$$

$$DAT = \frac{\%A.\left[QM - \left(L.DV^2 \pi.Cr.0,25Bd\right)\right]}{100.TT}$$

8. Method according to one of claims 3 to 7, **characterised in that** the additive input rate of flow set values (DAT, DAP) are automatically calculated at each operating cycle, from at least the following parameters:

   - duration (TT) of a transfer phase;
   - duration (TP) of a plasticising phase;

   and **in that**, in order to take into account the real operating of the injection moulding machine (2), the parameter (TP) and/or the parameter (TT) are variables that are automatically calculated at each cycle.

9. Dosing device (27) for at least one additive (A) at the inlet of an injection moulding machine (2), said device including a dosing component part (270) driven by control means (275) so as automatically to regulate the additive input rate of flow from a predetermined set value, known as an additive input rate of flow set value, **characterised in that** the control means (275) drive the dosing component part (270) according to a repetitive operating cycle, which includes a first phase corresponding to the transfer phase of the injection moulding machine, and a second phase corresponding to the plasticising phase of the injection moulding machine, and in function of at least two distinct additive input rate of flow set values: at least one additive input rate of flow set value (DAT) specific for the first transfer phase, and at least one additive input rate of flow set value (DAP) specific for the second phase.

10. Device according to claim 9, **characterised in that** each additive input rate of flow set value (DAT) for the transfer phase is greater than each additive input rate of flow set value (DAP) for the plasticising phase.

11. Device according to claim 9 or 10, **characterised in that** the control means (275) of the dosing device include calculation means (275a) designed automatically to calculate the additive input rate of flow set values at each operating cycle.

12. Device according to one of claims 9 to 11, **characterised in that** the calculation means (275a) are designed automatically to calculate the additive input rate of flow set values (DAT, DAP) from the following parameters:

   - duration (TT) of a transfer phase;
   - duration (TP) of a plasticising phase;
   - distance of travel (L) of the extrusion screw during the transfer phase;
   - rate (%A) of dosing additive (A);
   - quantity of material (QM) injected at each injection cycle;
   - diameter (Dv) of the extrusion screw;
   - compression rate (Cr) of the extrusion screw;
   - bulk density (Bd) of the polymer (P) at the inlet of the screw.

13. Device according to claim 12, **characterised in that** the calculation means (275a) are designed automatically to calculate the additive input rate of flow set values (DAT, DAP) by means of the following two formulae:

$$DAP = \frac{\left(L.DV^2\pi.Cr.Bd.\%A\right)}{400.TP}$$

$$DAT = \frac{\%A.\left[QM - \left(L.DV^2\pi.Cr.0,25Bd\right)\right]}{100.TT}$$

14. Device according to one of claims 9 to 13, **characterised in that** the operating of the control means (275) is synchronised with the operating of the injection moulding machine (2) by a synchronisation signal (SYNC) supplied by the injection moulding machine.

15. Injection moulding machine (2) including an extrusion screw (20), which is foreseen to be supplied by means of gravity with at least one polymer (P) in the form of pellets, and a dosing device (27) enabling the introduction into the barrel of the extrusion screw of at least one additive (A) with a controlled rate of flow, the extrusion screw (20) of the injection moulding machine operating according to a repetitive operating cycle, which includes a first so-called "transfer" phase, during which the extrusion screw (20) is translationally displaced forwards, followed by a second so-called "plasticising" phase, during which the extrusion screw (20) is made to rotate only and translationally displaces backwards, **characterised in that** the dosing device (27) is in accordance with the device described in one of claims 9 to 14.

16. Injection moulding machine according to claim 15, **characterised in that** it includes an injection cylinder (23) equipped with an injection plunger (24).

17. Injection moulding machine according to claim 15, **characterised in that** it is of the direct injection type.

18. Injection moulding machine according to one of claims 15 to 17, in which the control means (275) of the dosing device are synchronised by a synchronisation signal (SYNC) with the real cycle of the injection moulding machine.

19. Machine for producing plastic articles, and in particular plastic preforms, **characterised in that** it includes an injection moulding machine as described in one of claims 15 to 18, attached at its exit to a mould (1).

**Patentansprüche**

1. **Verfahren** zum Dosieren zumindest eines Zusatzstoffs (A) am Einlass einer Spritzgussmaschine (2) mit einer Extrusionsschnecke (20), die mittels Schwerkraft mit zumindest einem granulatartigen Polymer (P) gespeist wird und nach einem sich wiederholenden Betriebszyklus arbeitet, der eine erste Phase, die sogenannte "Übergangsphase", umfasst, bei der die Extrusionsschnecke (20) translatorisch nach vorne verschoben wird, gefolgt von einer zweiten Phase, der sogenannten "Plastifizierungsphase", bei der die Extrusionsschnecke (20) nur drehend angetrieben wird und sich translatorisch nach hinten verschiebt, wobei der zu dosierende Zusatzstoff (A) in das Innere des Gehäuses (21) der Extrusionsschnecke (20) der Spritzgussmaschine (2) zur gleichen Zeit wie das Polymer (P) während der Übergangsphase und während der Plastifizierungsphase eingeführt wird, **dadurch gekennzeichnet, dass** zur Berücksichtigung der Differenz zwischen der Istzuflussmenge an Polymer (P) in der Übergangsphase und der Istzuflussmenge an Polymer (P) in der Plastifizierungsphase der Zusatzstoff (A) am Einlass der Extrusionsschnecke in einer Zusatzstoff-Zuflussmenge während der Übergangsphase eingeführt wird, die sich von der Zusatzstoff-Zuflussmenge während der Plastifizierungsphase unterscheidet.

2. Verfahren nach Anspruch 1, **dadurch gekennzeichnet, dass** die Zusatzstoffzuflussmenge während der Übergangsphase größer ist als die Zusatzstoff-Zuflussmenge während der Plastifizierungsphase.

3. Verfahren nach Anspruch 1, **dadurch gekennzeichnet, dass** die Zusatzstoffzuführmenge ausgehend von zumindest zwei verschiedenen Sollwerten für die Zusafizstoff-Zuflussmenge kontrolliert wird, nämlich von zumindest einem Zusatzstoff-Zuflussmengen-Sollwert (DAT), der spezifisch für die Übergangsphase berechnet wird, und zumindest einem Zusatzstoff-Zuflussmengen-Sollwert (DAP), der spezifisch für die Plastifizierungsphase berechnet wird.

4. Verfahren nach den Ansprüchen 2 und 3, **dadurch gekennzeichnet, dass** jeder Zusatzstoff-Zuflussmengensollwert (DAT) für die Übergangsphase größer ist als jeder Zusatzstoffzuflussmengensollwert (DAP) für die Plastifizierungsphase.

5. Verfahren nach Anspruch 3 oder 4, **dadurch gekennzeichnet, dass** die ZusatzstoffZuflussmengensollwerte (DAT, DAP) automatisch bei jedem Betriebszyklus berechnet werden.

6. Verfahren nach einem der Ansprüche 3 bis 5, **dadurch gekennzeichnet, dass** die Zusatzstoff-Zuflussmengen-Sollwerte (DAT, DAP) ausgehend von den nachfolgenden Parametern berechnet werden:

   - Dauer (TT) einer Übergangsphase;
   - Dauer (TP) einer Plastifizierungsphase;
   - Weg (L) der Extrusionsschnecke während der Übergangsphase;
   - Proportion (%A) des zu dosierenden Zusatzstoffes (A);
   - bei jedem Einspritzzyklus verspritzte Materialmenge (QM);

- Durchmesser (Dv) der Extrusionsschnecke;
- Verdichtungsverhältnis (Cr) der Extrusionsschnecke;
- "Schüttdichte" (Bd) des Polymers (P) am Schneckeneinlass.

7. Verfahren nach Anspruch 6, **dadurch gekennzeichnet, dass** die Zusatzstoffzuflussmengensollwerte (DAT, DAP) mittels der beiden nachfolgenden Formeln berechnet werden

$$DAP = \frac{(L.DV^2.\pi.Cr.Bd.\%A)}{400.TP}$$

$$DAT = \frac{\%A.[QM - (L.DV^2.\pi.Cr.0,25Bd)]}{100.TT}$$

8. Verfahren nach einem der Ansprüche 3 bis 7, **dadurch gekennzeichnet, dass** die Zusatzstoffzuflussmengensollwerte (DAT, DAP) automatisch bei jedem Betriebszyklus ausgehend von den nachfolgenden Parametern berechnet werden:

    - Dauer (TT) einer Übergangsphase;
    - Dauer (TP) einer Plastifizierungsphase;

und dass zum Berücksichtigen des Istbetriebs der Spritzgussmachine (2) der Parameter (TP) und/oder der Parameter (TT) Variablen sind, die automatisch bei jedem Zyklus berechnet werden.

9. **Vorrichtung** (27) zum Dosieren zumindest eines Zusatzstoffs (A) am Einlass einer Spritzgussmaschine (2), welche Vorrichtung ein Dosierglied (270) aufweist, das über Steuermittel (275) so angesteuert wird, dass die Zusatzstoff-Zuführmenge ausgehend von einem vorbestimmten Sollwert, dem sogenannten Zusatzstoff-Zuflussmengen-Sollwert, automatisch eingestellt wird, **dadurch gekennzeichnet, dass** die Steuermittel (275) das Dosierglied (270) nach einem sich wiederholenden Betriebszyklus ansteuern, der eine erste Phase umfasst, die der Übergangsphase der Spritzgussmaschine entspricht, sowie eine zweite Phase, die der Plastifizierungsphase der Spritzgussmaschine entspricht, und in Abhängigkeit von zumindest zwei verschiedenen Zusatzstoff-Zuflussmengen-Sollwerten: Zumindest einem Zusatzstoff-Zuflussmengen-Sollwert (DAT), der spezifisch für die erste Übergangsphase ist, und zumindest einem zweiten Zusatzstoff-Zuflussmengen-Sollwert (DAP), der spezifisch für die zweite Phase ist.

10. Vorrichtung nach Anspruch 9, **dadurch gekennzeichnet, dass** jeder Zusatzstoffzuflussmengensollwert (DAT) für die Übergangsphase größer ist als jeder Zusatzstoffzuflussmengensollwert (DAP) für die Plastifizierungsphase.

11. Vorrichtung nach Anspruch 9 oder 10, **dadurch gekennzeichnet, dass** die Steuermittel (275) der Dosiervorrichtung Rechenmittel (275a) aufweisen, die dazu ausgelegt sind, automatisch die Zusatzstoffzuflussmengensollwerte bei jedem Betriebszyklus zu berechnen.

12. Vorrichtung nach einem der Ansprüche 9 bis 11, **dadurch gekennzeichnet, dass** die Rechenmittel (275a) dazu ausgelegt sind, automatisch die Zusatzstoffzuflussmengensollwerte (DAT, DAP) ausgehend von den nachfolgenden Parametern zu berechnen:

    - Dauer (TT) einer Übergangsphase;
    - Dauer (TP) einer Plastifizierungsphase;
    - Weg (L) der Extrusionsschnecke während der Übergangsphase;
    - Proportion (%A) des zu dosierenden Zusatzstoffes (A);
    - bei jedem Einspritzzyklus verspritzte Materialmenge (QM);
    - Durchmesser (Dv) der Extrusionsschnecke;
    - Verdichtungsverhältnis (Cr) der Extrusionsschnecke;
    - "Schüttdichte" (Bd) des Polymers (P) am Schneckeneinlass.

13. Vorrichtung nach Anspruch 12, **dadurch gekennzeichnet, dass** die Rechenmittel (275a) dazu ausgelegt sind, automatisch die Zusatzstoffzuflussmengensallwerte (DAT, DAP) mittels der beiden nachfolgenden Formeln zu berechnen

$$DAP = \frac{(L.DV^2.\pi.Cr.Bd.\%A)}{400.TP}$$

$$DAT = \frac{\%A.[QM - (L.DV^2.\pi.Cr.0,25Bd)]}{100.TT}$$

**14.** Vorrichtung nach einem der Ansprüche 9 bis 13, **dadurch gekennzeichnet, dass** der Betrieb der Steuermittel (275) mit dem Betrieb der Spritzgussmaschine (2) über ein von der Spritzgussmaschine stammendes Synchronisierungssignal (SYNC) synchronisiert ist.

**15.** Spritzgussmaschine (2) mit einer Extrusionsschnecke (20), die dazu vorgesehen ist, mittels Schwerkraft mit zumindest einem granulatartigen Polymer (P) gespeist zu werden, und mit einer Dosiervorrichtung (27), welche die Zufuhr zumindest eines Zusatzstoffs (A) mit kontrollierter Zusatzmenge in das Gehäuse der Extrusionsschnecke ermöglicht, wobei die Extrusionsschnecke (20) der Spritzgussmaschine nach einem sich wiederholenden Betriebszyklus arbeitet, der eine erste Phase, die sogenannte "Übergangsphase" umfasst, bei der die Extrusionsschnecke (20) translatorisch nach vorne verschoben wird, gefolgt von einer zweiten Phase, der sogenannten "Plastifizierungsphase", bei der die Extrusionsschnecke (20) nur drehend angetrieben wird und sich translatorisch nach hinten verschiebt, **dadurch gekennzeichnet, dass** die Dosiervorrichtung (27) der Vorrichtung nach einem der Ansprüche 9 bis 14 entspricht.

**16.** Spritzgussmaschine nach Anspruch 15, **dadurch gekennzeichnet, dass** sie einen Spritzzylinder (23) aufweist, der mit einem Spritzkolben (24) ausgestattet ist.

**17.** Spritzgussmaschine nach Anspruch 15, **dadurch gekennzeichnet, dass** sie vom Typ mit direkter Spritzung ist.

**18.** Spritzgussmaschine nach einem der Ansprüche 15 bis 17, wobei die Steuermittel (275) der Dosiervorrichtung über ein Synchronisierungssignal (SYNC) auf den Istzyklus der Spritzgussmaschine synchronisiert sind.

**19.** Maschine zum Herstellen von plastischen Gegenständen und insbesondere von plastischen Vorformlingen, **dadurch gekennzeichnet, dass** sie eine Spritzgussmaschine nach einem der Ansprüche 15 bis 18 aufweist und am Auslass an eine Gießform (1) anschließt.

FIG.1

FIG.2

FIG.3

DEBUT

40 — SYNC = 1 ? — NON

OUI

41 — DECLENCHEMENT TEMPO (TT)

42 — CONSIGNE_DEBIT = DAT

43 — FIN TEMPO ? — NON

OUI

FIG.4

44 — DECLENCHEMENT TEMPO (TP)

45 — CONSIGNE_DEBIT = DAP

46 — FIN TEMPO ? — NON

OUI

47 — CONSIGNE_DEBIT = 0

48 — CALCUL DE : DAT ; DAP

DEBIT D'ENTREE
POLYMERE (P)

TRANSFERT    TRANSFERT

D1

PLASTIFICATION   PLASTIFICATION

D2

TT  TP ATTENTE    Temps (s)

cycle (n)   cycle (n+1)

SYNC

1

0           Temps (s)

CONSIGNE DEBIT
D'ENTREE ADDITIF
(CONSIGNE_ DEBIT)

DAT

DAP

0          Temps (s)

FIG.5

DEBIT D'ENTREE
POLYMERE (P)

TRANSFERT

D1

PLASTIFICATION

D2

D3

Z1    Z2

TT         TP

Temps (s)

cycle (n)

CONSIGNE DEBIT
D'ENTREE ADDITIF
(CONSIGNE _DEBIT)

DAT

DAP

DAP'

Z1    Z2

Temps (s)

cycle (n)

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 10006364 A
- JP 03251420 A
- JP 01176540 A
- JP 10006364 B